# EUROPEAN PATENT SPECIFICATION

(11) **EP 3 972 467 B1**
(45) Date of publication and mention of the grant of the patent: **24.04.2024**
(21) Application number: 20808961.5
(22) Date of filing: 29.06.2020
(51) Int. Cl.: A47J 47/04, B65D 83/06, F25D 23/02, F25D 23/04, F25D 25/00, F25D 27/00, F25D 29/00

(54) **A COOLING APPLIANCE WITH A GRAIN DISPENSING UNIT**
KÜHLGERÄT MIT EINER KORNAUSGABEEINHEIT
APPAREIL DE REFROIDISSEMENT DOTÉ D'UNE UNITÉ DE DISTRIBUTION DE GRAINS

(30) Priority: 22.05.2019 TR 201907746
(43) Date of publication of application: 30.03.2022
(73) Proprietor: Arçelik Anonim Sirketi, 34445 Istanbul (TR)
(72) Inventor: ERDAL, Gizem, 34445 Beyoglu/Istanbul (TR); KAYMAK, Mehmet Ercan, 34445 Beyoglu/Istanbul (TR); OZYUKSEL, Faik Emre, 34445 Beyoglu/Istanbul (TR); GEVREK SARIOGLU, Fatma, 34445 Beyoglu/Istanbul (TR); MUTLU BOZAY, Sati, 34445 Beyoglu/Istanbul (TR)
(86) International application number: PCT/TR2020/050555
(87) International publication number: WO 2020/236123

(56) References cited:
- WO-A1-99/16338
- CN-A- 103 673 490
- CN-A- 106 037 548
- CN-A- 106 679 309
- CN-A- 106 705 553
- CN-B- 106 037 549
- CN-U- 205 860 645
- KR-A- 20090 063 427

## Description

The present invention relates to a cooling appliance, in particular to a cooling appliance having a grain dispenser.

High relative humidity is a factor that needs to be taken into account when storing grain and legumes as it adversely affects their shelf life. Humidity increases the possibility of fungal or other bacterial growth on the grain and legumes causing possible health concerns. Apart from micro microbiological infections, it is observed that the average nutritional value loss is directly proportional to the high relative humidity. In regions having high relative humidity, the users are storing their grain and legumes inside cooling appliances to prolong the shelf life. Since the cooling appliances lack necessary storage containers, the users are storing their grain and legumes inside the cooling appliances via jars, and other containers that are mostly hermetically sealed from the inner volume of the cooling appliance. The said storage containers occupy the inner volume of the cooling appliances, decreasing the overall usage volume. Another problem with storing the grain and legumes inside hermetically sealed containers is that the grain and legumes are living organisms and continue their metabolic activities. Meaning that they continue to inhale and exhale and need to be aired every now then to keep their nutritional value high. Apart from this, the grain and legumes release water vapor during their metabolic activities. In the case wherein the users store their grain and legumes in an air tight container and inside the cooling appliances, the water vapor condenses inside the container causes further health issues. Additionally, the users must remove the said jars or containers from the cooling appliance, open them and pour the contents to a secondary and a smaller container to scale the amount before cooking. This is unfavorable from users' perspective as it causes additional work load.

A prior art publication in the technical field of the present invention may be referred to as JP5118698B2 among others, the document disclosing a cooling appliance having a container specialized for storing granular foodstuff such as grain and legumes.

A prior art publication in the technical field of the present invention may be referred to as KR101336894B1among others, the document disclosing a cooling appliance having a container specialized for storing granular foodstuff such as grain and legumes.

A prior art publication in the technical field of the present invention may be referred to as WO9916338A1 among others, the document disclosing a flow regulator for controlling the flow of material from a container.

A prior art publication in the technical field of the present invention may be referred to as KR20090063427A among others, the document disclosing a container for packaging a tea bag. A prior art publication in the technical field of the present invention may be referred to as CN205860645U among others, the document disclosing a material access device and a refrigerator with the material access device.

A prior art publication in the technical field of the present invention may be referred to as CN106037549B among others, the document disclosing a quantitative distributing device and refrigerator provided with same.

An objective of the present invention is to provide a specialized grain dispensing unit inside the cooling appliance via which the grain, legumes and granular foodstuff are stored and meanwhile providing easy access to said foodstuff.

The present invention defines a cooling appliance having a body and a door pivotable attached onto the body. The door has an inner liner facing the interior volume of the cooling appliance in the closed position of the door. A grain dispensing unit is detachably mounted onto the inner liner. The grain dispensing unit comprises a container wherein the grain, legume or similar granular foodstuff are stored. A dispenser is pivotable attached on to a lower portion of the container between a closed position and an open position. The dispenser is pressed by means of force exerted by a user and pivots from the closed position to the open position. A chute is provided on the dispenser and is configured to allow the grain to flow under the influence of gravity in the open position of the dispenser. By means of the grain dispenser, the user has access to the stored granular foodstuff in an easy and single-handed manner. This provides ease of use for the user. Another advantageous effect is that the grain and legumes are stored in a controlled atmosphere that prolongs their shelf life.

In the invention, the container comprises a lug and the dispenser comprises a slot. The slot and the lug are configured to interlock with each other. By this means, the dispenser is easily operable in a pivotable manner.

In the invention, a biasing means is placed in between the slot and the container. The biasing means biases the dispenser towards the closed position. The dispenser is pressed by means of force applied by the user towards the open position. As the force applied by the user is removed, the biasing means automatically forces the dispenser towards the closed position. Therefore, further ease of use is provided for the user.

In the invention, the container comprises a first arch in the shape of a protrusion to partly surround the lug. In a preferred embodiment, the first arch is distanced from the lug by a predetermined distance. Similarly, the dispenser comprises a second arch in the shape of a protrusion to partly surround the slot. In the same preferred embodiment, the second arch is distanced from the lug by a predetermined distance. Upon pivotably attaching the dispenser on to a lower part of the container, the first arch and the second arch forms a channel in between. The channel is used for housing and guiding the biasing means.

In an embodiment of the invention, the container comprises an opening on an upper portion of the container. By means of the opening, the user may fill the container without removing the grain dispensing unit from the cooling appliance. An air sealing member is placed onto the opening that peripherally surrounds the opening. A lid is placed onto the air sealing member covering the opening in an air tight manner. The lower portion of the container is in gas communication with the outer environment which helps to remove the moisture inside the container naturally occurring due to metabolic activities of grains or legumes stored inside the container. This helps minimize the fungal or bacterial infection occurring because of moisture.

In an embodiment of the invention, the dispenser comprises a rim. The rim projects downwards via which the user forces the dispenser to pivot towards the pen position. The rim increases the effort distance providing smoother operation for the pivot movement for the dispenser.

In an embodiment of the invention, the rim is curved to match the cylindrical shapes most kitchen receptacles have. As the user presses the dispenser, the curved shaped rim matches with the shape of kitchen tools such as cups, pots, jars or the like. Therefore minimizing the possibility of the grains to spill around.

In an embodiment of the invention, the lid comprises a humectant member to remove and retain excess humidity inside the container. In a preferred embodiment the lid has a secondary opening covered by the humectant member in the form of a semipermeable membrane. In a further preferred embodiment, the humectant member is attached to the lid to face the interior volume of the container. It is to be under stood that the humectant member can also be placed anywhere inside the container.

By means of the present invention, the cooling appliances are provided with the grain dispensing unit via which the user may access the grain simply by pushing a cup, pot, jar or the like towards the dispenser providing ease of use for the user.

Another advantageous effect provided with the cooling appliance of the present invention is that the grain or legumes are stored in an environment having well regulated atmospheric conditions. The relative humidity inside the cooling appliances is controlled therefore helping to prolong shelf life of said foodstuff.

The drawings are not meant to delimit the scope of protection as identified in the claims nor should they be referred to alone in an effort to interpret the scope identified in the claims without recourse to the technical disclosure in the description of the present invention.

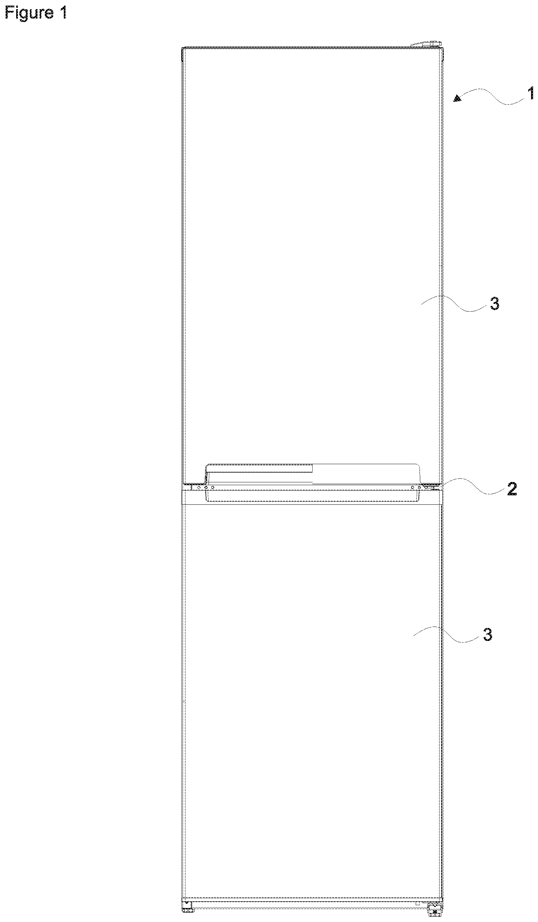

Figure 1 - is a front view of the cooling appliance

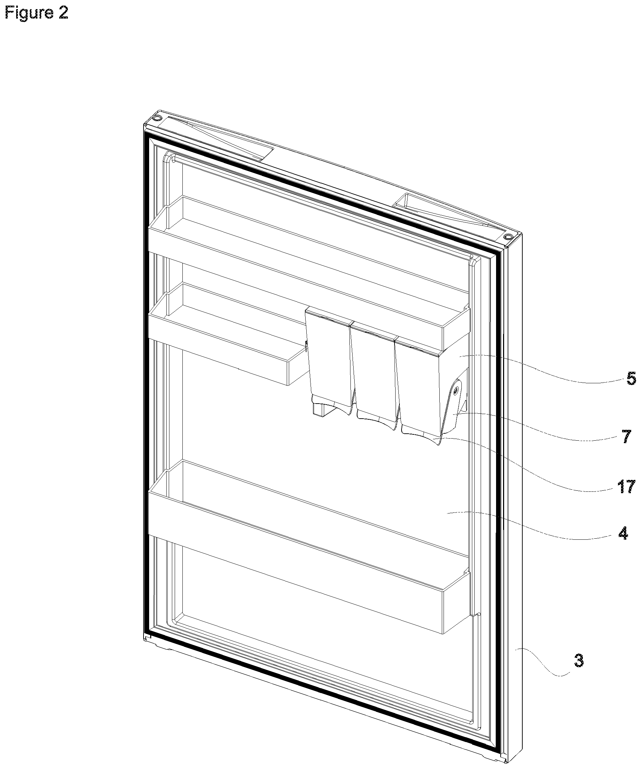

Figure 2 - is an isolated view of the door

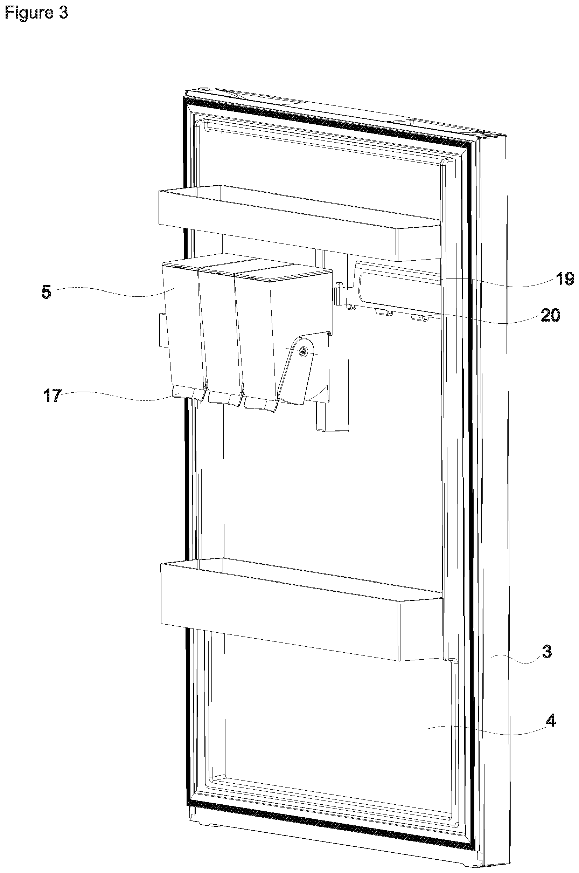

Figure 3 - is an isolated view of the door

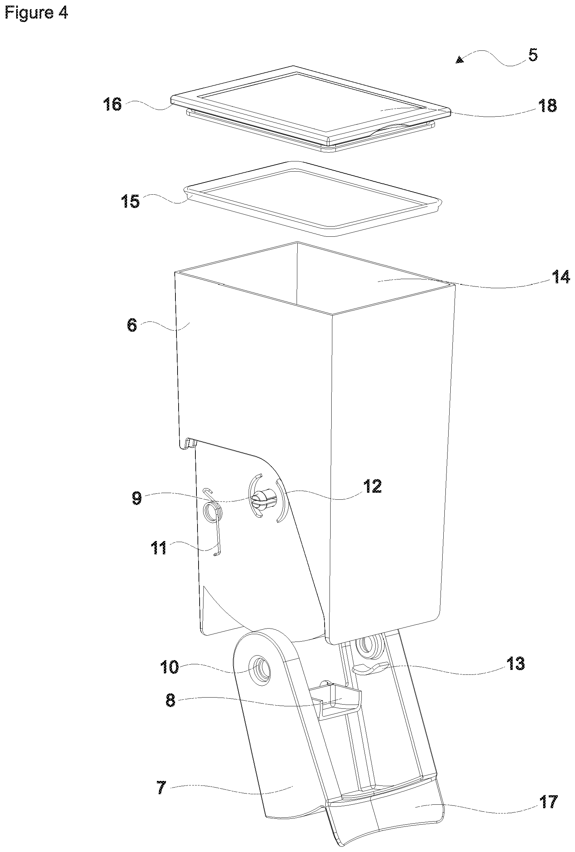

Figure 4 - is an exploded view of the grain dispenser

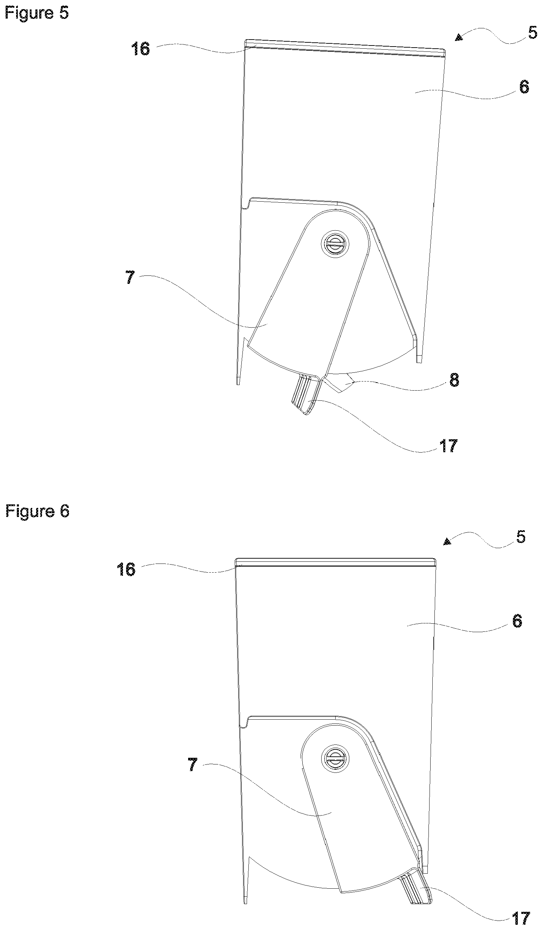

Figure 5 - is a side view of the grain dispensing unit in open position
Figure 6 - is a side view of the grain dispensing unit in closed position

The following numerals are assigned to different parts demonstrated in the drawings and referred to in the present detailed description of the invention:
1. Cooling appliance
2. Body
3. Door
4. Inner liner
5. Grain dispenser
6. Container
7. Dispenser
8. Chute
9. Lug
10. Slot
11. Biasing means
12. First arch
13. Second arch
14. Opening
15. Air sealing member
16. Lid
17. Rim
18. Humectant member
19. Bracket
20. Connecting tab

The present invention relates to a cooling appliance (1) comprising; a body (2), a door (3) having an inner liner (4), a grain dispensing unit (5) adapted to be detachably mounted onto the inner liner (4) comprising; a container (6) for storing the grain.

The present invention relates to a cooling appliance (1) comprising a dispenser (7) pivotably attached on a lower portion of the container (6), wherein the dispenser (7) is pressed by means of force applied by a user to pivot between an open position allowing the grain to flow under the influence of gravity and a closed position inhibiting flow of the grain.

In another embodiment, the cooling appliance (1) comprises a chute (8) provided in the dispenser (7) in communication with the container (6) to transmit the grain in the open position.

The container (6) is used as a volume to store granular foodstuff such as the grain and legumes. The dispenser (7) is pivotably attached on a lower portion of the container (6). The dispenser (7) pivots between the closed position and the open position and as the name suggests, during the open position, the grain and legumes are free to flow from the container (6) towards the chute (8) provided on the dispenser (7). Likewise, during the closed position, the grain and legumes are prevented to flow through the dispenser (7) via the chute (8). The lower surface of the container (6) is in conical shape to facilitate the flow of the grain and legumes. The lower most portion of the said conical structure is covered by the chute (8) in the closed position. As the dispenser (7) is pressed by means of force applied by a user, the chute (8) moves away from the lower most portion of the said conical structure thus forming a clearance for the grain to flow. The structure of the container (6) and the chute (8) is formed such that the weight of the grain stored inside the container (6) is not sufficient to force the dispenser (7) to the open position. The grain dispensing unit (5) is removably attached onto the inner liner (4). The user may easily remove the grain dispensing unit (5) from the inner liner (4). The grain dispensing unit (5) is configured to stand upright when placed onto a flat surface. The lower end of the dispenser (7) and the lowermost portion of the container (6) forms points of contact with the ground, stabilizing the grain dispensing unit (5). By means of the grain dispensing unit (5) the grain and the legumes are stored in a humidity controlled and cold environment, prolonging their shelf life. Another advantageous effect provided by means of this invention is that the user may access the grain and legumes simply by opening the door (3) of the cooling appliance (1) and pressing a receptacle to the dispenser (7) with a single hand, forcing the dispenser (7) from the closed position to the open position, thereby allowing free flow of the grain and legumes.

The container (6) comprises a lug (9) and that the dispenser (7) comprises a slot (10) via which the dispenser (7) is pivotably attached to the container (6). The slot (10) is seated onto the lug (9) in a pivotable manner. The lug (9) comprises a pair of semi-circular protrusion forming a cylindrical shape with a cutout in between. A tab is provided at the tip of each of the protrusions. The dispenser (7) is attached onto the container (6) by pressing the said protrusion and inserting the slot (10) onto the lug (9). The tabs are locked onto the slot (10). By means of the slot (10) and the lug (9) the dispenser (7) is pivotably and removably attached to the container (6).

The cooling appliance (1) comprises a biasing means (11) placed in between the slot (10) and the container (6) biasing the dispenser (7) towards the closed position. The biasing means (11) can be a helical spring or a leaf spring or any other elastic means.

The container (6) comprises a first arch (12) configured to at least partly surround the lug (9) and that the dispenser (7) comprises a second arch (13) configured to at least partly surround the slot (10) wherein the first arch (12) and the second arch (13) forms a channel (not shown) guiding the biasing means (11). In a preferred embodiment, the container (6) comprises a pair of first archs (12). Likewise, the dispenser (7) comprises a pair of second archs (13). The said archs (12,13) forms a cylindrical wall around the lug (9) in the closed position of the dispenser (7). The biasing means (11) is attached to one of the said first archs (12) from one end and to the one of the said second archs (13) from the other end.

In another embodiment, the grain dispensing unit (5) comprises; an opening (14) on an upper portion of the container (6) and an air sealing member (15) peripherally surrounding the opening (14) and a lid (16) placed onto the air sealing member (15). The opening (14) is used to fill the container (6) with the grain or legumes depending on users' choice. The lid (16) covers the opening (14).

In another embodiment, the dispenser (7) comprises a rim (17) protruding downwards via which the dispenser (7) is pressed by means of force applied by the user. The dispenser (7) comprises a rim (17) protruding downwards. The user presses the receptacle to the dispenser (7) via the rim (17) providing ease of use for the user.

In another embodiment, the rim (17) is curved. The rim (17) is curved so as to match the shape of the receptacles used by the users to receive grain or legumes from the dispenser (7). The users mainly use glassware or similar cylindrical kitchenware to scale the grain or legumes they are going to cook. Therefore, the rim (17) with a curved shape provides ease of use and also minimizes spillage of the grain or legumes.

In another embodiment, the lid (16) comprises a humectant member (18). A humectant member (18) is placed inside the lid (16) to remove and retain any excess water or vapor from the container (6). It is to be understood that the position of the humectant member (18) can be anywhere inside the container (6).

In another embodiment, the grain dispensing unit (5) comprises a bracket (19) attached onto the inner liner (4) wherein the bracket (19) comprises a connecting tab (20) onto which the grain dispensing unit (5) is removably placed. The grain dispensing unit (5) is removably placed onto the inner liner via the bracket (19). Upon placing the grain dispensing unit (5) onto the bracket (19), the grain dispensing unit (5) is inclined with respect to the inner liner (4). The grain dispensing unit (5) contacts the inner liner (4) via the bottom of the container (6). By this means, as the user applies onto the dispenser (7), the container (6) abuts against the inner liner (4) preventing the sensation of the bending of the inner liner (4) and that of the grain dispensing unit (5).

In the cooling appliance (1) of the present invention, the users are provided with a grain dispensing unit (5) operable by a single hand simply by opening the door (3) and pressing the receptacle to the dispenser (7), pivoting the dispenser (7) from the closed position to the open position thereby allowing the grain, legumes or similar granular foodstuff to pour inside the receptacle. Likewise, the dispenser (7) pivots automatically to its initial closed position as the user removes the receptacle away from the dispenser (7), therefore providing ease of operation for the user.

## Claims

1. A cooling appliance (1) comprising;
a body (2),
a door (3) having an inner liner (4),
a grain dispensing unit (5) adapted to be detachably mounted onto the inner liner (4) comprising;
a container (6) for storing the grain,
a dispenser (7) pivotably attached on a lower portion of the container (6), wherein the dispenser (7) is pressed by means of force applied by a user to pivot between an open position allowing the grain to flow under the influence of gravity and a closed position inhibiting flow of the grain **characterized in that** the container (6) comprises a lug (9) and that the dispenser (7) comprises a slot (10) via which the dispenser (7) is pivotably attached to the container (6), a biasing means (11) placed in between the slot (10) and the container (6) biasing the dispenser (7) towards the closed position and the container (6) comprises a first arch (12) configured to at least partly surround the lug (9) and that the dispenser (7) comprises a second arch (13) configured to at least partly surround the slot (10) wherein the first arch (12) and the second arch (13) forms a channel guiding the biasing means (11).

2. A cooling appliance (1) according to claim 1, **characterized by** a chute (8) provided in the dispenser (7) in communication with the container (6) to transmit the grain in the open position.

3. A cooling appliance (1) according to any of the preceding claims, **characterized in that** the grain dispensing unit (5) comprises; an opening (14) on an upper portion of the container (6) and an air sealing member (15) peripherally surrounding the opening (14) and a lid (16) placed onto the sealing member (15).

4. A cooling appliance (1) according to any of the preceding claims, **characterized in that** the dispenser (7) comprises a rim (17) protruding downwards via which the dispenser (7) is pressed by means of force applied by the user.

5. A cooling appliance (1) according to claim 4, **characterized in that** the rim (17) is curved.

6. A cooling appliance (1) according to any of the preceding claims, **characterized in that** the grain dispensing unit (5) comprises a bracket (19) attached onto the inner liner (4) wherein the bracket (19) comprises a connecting tab (20) onto which the grain dispensing unit (5) is removably placed.

## Patentansprüche

1. Ein Kühlgerät (1) umfasst;
einen Körper (2),
eine Tür (3) mit einer Innenauskleidung (4),
eine Getreidespendereinheit (5), die abnehmbar an der Innenauskleidung (4) angebracht werden kann, umfassend;
einen Behälter (6) zur Lagerung des Getreides,
einen Spender (7), der schwenkbar an einem unteren Abschnitt des Behälters (6) angebracht ist, wobei der Spender (7) mittels einer von einem Benutzer aufgebrachten Kraft gedrückt wird, um zwischen einer offenen Position, die es dem Korn ermöglicht, unter dem Einfluss der Schwerkraft zu fließen, und einer geschlossenen Position, die den Fluss des Korns verhindert, zu schwenken, **gekennzeichnet ist es dadurch,** dass der Behälter (6) eine Lasche (9) aufweist und dass der Spender (7) einen Schlitz (10) aufweist, über den der Spender (7) schwenkbar am Behälter (6) befestigt ist, ein Vorspannmittel (11), das zwischen dem Schlitz (10) und dem Behälter (6) angeordnet ist und den Spender (7) in Richtung der geschlossenen Position vorspannt, und der Behälter (6) eine erste Wölbung (12) umfasst, die so gestaltet ist, dass sie die Lasche (9) zumindest teilweise umgibt, und dass der Spender (7) eine zweite Wölbung (13) umfasst, die so gestaltet ist, dass sie den Schlitz (10) zumindest teilweise umgibt, wobei die erste Wölbung (12) und die zweite Wölbung (13) einen Kanal bilden, der das Vorspannmittel (11) führt.

2. Ein Kühlgerät (1), wie in Anspruch 1 aufgeführt, **ist dadurch gekennzeichnet, dass** eine im Spender (7) vorgesehene Rampe (8) mit dem Behälter (6) in Verbindung steht, um das Getreide in der geöffneten Stellung weiterzuleiten.

3. Ein Kühlgerät (1), wie in einem der vorherigen Ansprüchen aufgeführt, **ist dadurch gekennzeichnet, dass** die Getreidespendereinheit (5) eine Öffnung (14) an einem oberen Teil des Behälters (6) und ein Luftdichtungselement (15), das die Öffnung (14) am Umfang umgibt, sowie einen auf dem Luftdichtungselement (15) angebrachten Deckel (16) umfasst.

4. Ein Kühlgerät (1), wie in einem der vorherigen Ansprüchen aufgeführt, **ist dadurch gekennzeichnet, dass** der Spender (7) einen nach unten vorstehenden Rand (17) aufweist, über den der Spender (7) durch eine vom Benutzer aufgebrachte Kraft gedrückt wird.

5. Ein Kühlgerät (1), wie in Anspruch 4 aufgeführt, **ist dadurch gekennzeichnet, dass** der Rand (17) gekrümmt ist.

6. Ein Kühlgerät (1), wie in einem der vorherigen Ansprüchen aufgeführt, **ist dadurch gekennzeichnet, dass** die Getreidespendereinheit (5) eine Halterung (19) umfasst, die an der Innenauskleidung (4) befestigt ist, wobei die Halterung (19) eine Verbindungslasche (20) umfasst, auf der die Getreidespendereinheit (5) abnehmbar angeordnet ist.

## Revendications

1. Un appareil de refroidissement (1) comprenant :
un corps (2),
une porte (3) avec une doublure intérieure (4),
une unité de distribution de grain (5) conçue pour être montée de manière détachable sur la doublure intérieure (4), comprenant :
un récipient (6) pour stocker le grain,
un distributeur (7) fixé pivotant sur une partie inférieure du récipient (6), dans lequel le distributeur (7) peut pivoter entre une position ouverte permettant au grain de s'écouler sous l'effet de la gravité et une position fermée inhibant l'écoulement du grain.
**Caractérisé en ce que** le récipient (6) comprend une patte (9) et que le distributeur (7) comprend une fente (10) via laquelle le distributeur (7) est fixé pivotant au récipient (6), un moyen de sollicitation (11) placé entre la fente (10) et le récipient (6) sollicitant le distributeur (7) vers la position fermée et le récipient (6) comprend un premier arc (12) configuré pour entourer au moins partiellement la patte (9) et que le distributeur (7) comprend un second arc (13) configuré pour entourer au moins partiellement la fente (10), le premier arc (12) et le second arc (13) formant un canal guidant le moyen de sollicitation (11).

2. Un appareil de refroidissement (1) selon la revendication 1, **caractérisé par** une goulotte (8) disposée dans le distributeur (7) en communication avec le récipient (6) pour transmettre le grain dans la position ouverte.

3. Un appareil de refroidissement (1) selon l'une quelconque des revendications précédentes, **caractérisé en ce que** l'unité de distribution de grain (5) comprend : une ouverture (14) sur une partie supérieure du récipient (6), et un élément d'étanchéité à l'air (15) entourant périphériquement l'ouverture (14), ainsi qu'un couvercle (16) placé sur l'élément d'étanchéité (15).

4. Un appareil de refroidissement (1) selon l'une quelconque des revendications précédentes, **caractérisé en ce que** le distributeur (7) comprend une jante (17) faisant saillie vers le bas, par l'intermédiaire de laquelle le distributeur (7) est pressé par la force appliquée par l'utilisateur.

5. Un appareil de refroidissement (1) selon la revendication 4, **caractérisé en ce que** la jante (17) est incurvée.

6. Un appareil de refroidissement (1) selon l'une quelconque des revendications précédentes, **caractérisé en ce que** l'unité de distribution de grain (5) comprend une console (19) fixée sur la doublure intérieure (4), la console (19) comprenant une patte de connexion (20) sur laquelle l'unité de distribution de grain (5) est placée de manière amovible.
